# EUROPÄISCHE PATENTSCHRIFT

(11) **EP 0 386 433 B1**
(45) Veröffentlichungstag und Bekanntmachung des Hinweises auf die Patenterteilung: **19.06.1996**
(21) Anmeldenummer: 90101539.6
(22) Anmeldetag: 26.01.1990
(51) Int. Cl.: F16F 9/48, F16F 9/50

(54) **Hydraulischer Stossdämpfer**
Hydraulic shock absorber
Amortisseur de chocs hydraulique

(30) Priorität: 08.03.1989 DE 3907355
(43) Veröffentlichungstag der Anmeldung: 12.09.1990
(73) Patentinhaber: Festo KG, D-73734 Esslingen (DE)
(72) Erfinder: Schnetz, Rainer, D-8000 München 70 (DE)
(74) Vertreter: Abel, Martin, Dipl.-Ing.

(56) Entgegenhaltungen:
- DE-U- 6 800 081
- FR-A- 2 079 874
- FR-A- 2 612 589
- GB-A- 1 304 368
- US-A- 3 461 991

## Beschreibung

Die Erfindung betrifft einen hydraulischen Stoßdämpfer gemäß dem Oberbegriff des Anspruchs 1.

Ein solcher beispielsweise aus der DE-U-68 00 081 bekannter Stoßdämpfer hat den Nachteil, daß er verhältnismäßig viel Raum in Anspruch nimmt, nämlich breit baut, und daß eine automatische Rückstellung nur bei Anwendung zusätzlicher Geräte und Maßnahmen möglich ist. So muß ein zusätzliches Gasvolumen vorgesehen werden, das beim Verschieben des Kolbens ebenfalls komprimiert wird, um die Kolbenstange bei Entlastung von der abzubremsenden Masse wieder auszufahren. Der Druck des Druckgases darf jedoch keinesfalls so hoch sein, daß eine Rückfederung der Kolbenstange und der abzubremsenden Masse auftritt, was technisch kompliziert und aufwendig zu realisieren ist.

Ein weiterer, aus der DE-C-33 02 790 bekannter Stoßdämpfer arbeitet zwar bei hoher Geschwindigkeit und/oder Energie von auf den Kolben einwirkenden Stößen problemlos, jedoch wird bei geringer Aufprallgeschwindigkeit der zu dämpfenden Massen oft kaum eine Dämpfungswirkung erreicht. Zwar läßt sich die Ansprechschwelle des bekannten Stoßdämpfers reduzieren, doch geht dies dann zu Lasten der Dämpfungsqualität bei größeren Aufprallgeschwindigkeiten.

Der Erfindung liegt daher die Aufgabe zugrunde, einen Stoßdämpfer der eingangs genannten Art so zu verbessern, daß unabhängig von der Art und Intensität der zu dämpfenden Bewegung ohne Nachjustierung ein optimales Dämpfungsverhalten erreicht wird.

Diese Aufgabe wird durch die Merkmale des Anspruchs 1 gelöst.

Durch die erfindungsgemäße Anordnung der Druckräume und Kolben wird die erwünschte kompakte und hinsichtlich der Breite wenig Raum in Anspruch nehmende Anordnung erreicht. Durch die spezielle Kombination der druckabhängig wirkenden Dämpfungseinrichtung und der wegabhängig arbeitenden Dämpfungseinrichtung wird der Stoßdämpfer in die Lage versetzt, sowohl bei der Dämpfung der Stöße von mit hoher Geschwindigkeit bewegten geringen Massen als auch der Stöße von mit geringer Geschwindigkeit bewegten großen Massen ohne Nachjustierung ein optimales Dämpfungsergebnis zu erzielen, wozu eine im Vergleich zu den bekannten Anordnungen einfachere Konstruktion ausreichend ist. Die Rückstellung des Arbeitskolbens erfolgt ohne besondere zusätzliche Maßnahmen in vorteilhafter Weise sehr schnell.

Vorteilhafte Weiterbildungen der Erfindung sind in den Unteransprüchen aufgeführt.

Die Schließkraft des Verschlußgliedes der ersten Dämpfungseinrichtung kann in vorteilhafter Weise veränderbar einstellbar sein, um den für die öffnung des Verschlußgliedes erforderlichen Schaltdruckwert zu beeinflussen und um eine den zu erwartenden Belastungen Rechnung tragende Grundeinstellung vornehmen zu können. Vorzugsweise ist eine Tellerfederanordnung zur Lieferung der Schließkraft des Verschlußgliedes vorgesehen. Einen kurzbauenden, kompakten Stoßdämpfer erhält man vor allem dann, wenn das Verschlußglied mit dem Arbeitskolben mitbewegbar und insbesondere in den Arbeitskolben integriert ist.

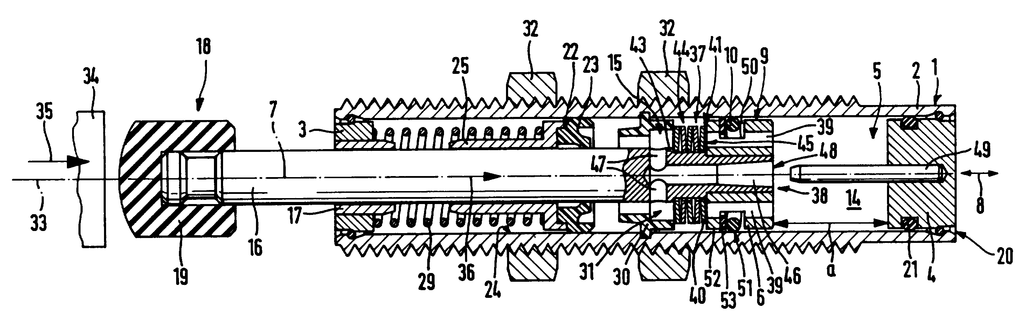

Nachfolgend wird die Erfindung anhand der beigefügten Zeichnung näher erläutert, die eine erste Bauform des erfindungs-gemäßen Stoßdämpfes im Längsschnitt zeigt.

Der abgebildete hydraulische Stoßdämpfer verfügt über ein Gehäuse 1, das in Art eines Zylinders ausgebildet ist. Es besteht insbesondere aus einem linearen Zylinderrohr 2, das am einen Ende durch einen Deckel 3 und am anderen Ende durch ein Bodenteil 4 dichtend abgeschlossen ist. Im Gehäuse-Innern befindet sich ein Dämpfungsraum 5, in dem ein Kolben 6 in Zylinder-Längsrichtung 7 gemäß Doppelpfeil 8 hin und her verschiebbar geführt ist. Im Bereich seines Außenumfanges 9 ist ein ringsum laufendes Dichtungselement 10, z.B. ein Dichtring, angeordnet, der zwischen Stellkolben 6 und Gehäuse 1 dichtet.

Durch den Kolben 6 ist der Dämpfungsraum 5 unter Abdichtung in einen bodenteilseitigen Hochdruckraum 14 und einen deckelseitigen Niederdruckraum 15 unterteilt. Letzterer wird koaxial von einer als Kolbenstange ausgebildeten Stoßstange 16 durchquert, die mit dem Kolben 6 fest verbunden ist und den Deckel 3 zur Außenseite hin durchsetzt. Im Durchdringungsbereich des Deckels 3 ist zweckmäßigerweise eine z.B. als Führungshülse ausgebildete Führungseinrichtung 17 zur Verschiebeführung der Stoßstange 16 vorgesehen. Am äußeren Ende der Stoßstange 16 ist eine Stoßeinleitungspartie 18 vorhanden, die, wie abgebildet, z.B. einen Gummipuffer 19 umfassen kann.

Der Hochdruckraum 14 wird an seiner dem Kolben 6 entgegengesetzten Axialseite vom Bodenteil 4 begrenzt, das zweckmäßigerweise von der einen Stirnseite 20 des Gehäuses 1 her in den Dämpfungsraum 5 dicht eingesetzt ist. Zur Abdichtung gegenüber dem Gehäuse 1 ist ein in einer Umfangsnut des Bodenteils 4 einsitzender Dichtring 21 vorgesehen.

Der kolbenstangenseitige Niederdruckraum 15 wird an der dem Kolben 6 entgegengesetzten Axialseite von einem im Dämpfungsraum 5 gemäß Doppelpfeil 8 axial verschieblich angeordneten Ausgleichskolben 22 begrenzt. Er umgibt die Stoßstange 16 koaxial mit Gleitspiel und ist mit einer entsprechend koaxial angeordneten ringförmigen Dichtpartie 23 versehen, die radial außen an der Innenfläche 24 des Dämpfungsraumes 5 und radial innen an der Mantelfläche der Stoßstange 16 dichtend und verschiebbar anliegt.

Über eine die Stoßstange 16 umschließende Hülsenpartie 25 ist der Ausgleichskolben 22 ohne Verkantungsgefahr an der Stoßstange 16 verschiebbar geführt.

Der Ausgleichskolben 22 ist ferner in Richtung des Kolbens 6 nachgiebig vorgespannt, welche Vorspannung vorzugsweise von einer Federanordnung 29 herrührt, die sich zwischen dem Deckel 3 und dem Ausgleichskolben 22 abstützt.

In seiner in der Zeichnung abgebildeten Ausgangsstellung ist der Kolben 6 mit einem dem maximalen Dämpfungsweg entsprechenden Abstand a zum Bodenteil 14 angeordnet, wobei der Hochdruckraum 14 sein maximales Volumen aufweist. In dieser Ausgangsstellung liegt der Kolben 6 an einem im Niederdruckraum 15 angeordneten Anschlag 30 an. Dieser ist zweckmäßigerweise als Anschlagring ausgebildet, der am Innenumfang 24 des Dämpfungsraumes 5 gehäusefest festgelegt ist und zwischen sich und der Stoßstange 16 einen insbesondere ringförmigen Durchgang 31 freiläßt. Der Anschlag 30 besteht zweckmäßigerweise aus Kunststoffmaterial

Der vom Bodenteil 4 und vom Ausgleichskolben 22 begrenzte Abschnitt des Dämpfungsraumes 5 ist vollständig mit einem Hydraulikmedium, insbesondere einer hydraulischen Flüssigkeit wie Öl, gefüllt. Dieses Hydraulikmedium befindet sich also sowohl im Hochdruckraum 14 als auch im Niederdruckraum 15 sowie in später noch zu erläuternden Verbindungskanälen dieser beiden Räume.

Zum Betrieb wird der Stoßdämpfer mit seinem Gehäuse 1, z.B. unter Vermittlung von Befestigungseinrichtungen 32, in geeigneter Weise z.B. an einem Maschinengestell ortsfest festgelegt, wobei er so ausgerichtet wird, daß seine Stoßeinleitungspartie 18 in die Bewegungsbahn 33 einer in seiner Bewegung zu dämpfenden Masse 34 ragt. Hier ist es von Vorteil, wenn die Bewegungsbahn 33 parallel zur Stoßstange 16 verläuft und insbesondere mit deren Längsachse fluchtet. Die bahnbewegte Masse 34 kann von einem beliebigen Körper gebildet sein, z.B. von einem bei Erreichen einer Endlage gedämpft abzubremsenden Maschinenteil.

Wenn die bewegte Masse 34 gemäß Pfeil 35 auf die Stoßeinleitungspartie 18 auftrifft, führt der Kolben 6 eine Dämpfungsbewegung in Richtung zum Bodenteil 4 aus, wobei er vom Anschlag 30 abhebt. Hierdurch wird der Hochdruckraum 14, d.h. das darin enthaltene Hydraulikmedium, beaufschlagt und unter Hochdruck versetzt. Hierdurch wird dieses Hydrauikmedium aus dem Hochdruckraum 14 verdrängt und strömt in den Niederdruckraum 15 über. Dadurch wird Bewegungsenergie abgebaut, die dazu führt, daß der Kolben 6 und die zu dämpfende Masse 34 im Rahmen einer gedämpften Bewegung zumindest kurzzeitig zum Stillstand gelangen.

Erfindungsgemäß sind zwei Dämpfungseinrichtungen 37,38 vorhanden, mit denen die vom Hochdruckraum 14 in den Niederdruckraum 15 gerichtete Verdrängungsströmung reguliert werden kann. Hierbei handelt es sich um eine druckabhängig arbeitende erste Dämpfungseinrichtung 37 und eine unter Einfluß des Verschiebeweges des Kolbens, d.h. in Abhängigkeit vom bei der Dämpfungsbewegung 36 zurückgelegten Dämpfungshub wegabhängig arbeitende zweite Dämpfungseinrichtung 38.

Beide Dämpfungseinrichtungen 37,38 sind parallelgeschaltet, so daß sie je nach Betriebszustand abwechselnd oder gleichzeitig wirksam sein können. Beide Dämpfungseinrichtungen 37,38 sind somit in der Lage, jeweils einen separaten Anteil der aus dem Hochdruckraum 14 verdrängten Strömung zu regulieren.

Die druckabhängig arbeitende erste Dämpfungseinrichtung 37 enthält ein Überströmventil 41, das in einen möglichen Strömungsweg der Verdrängungsströmung eingeschaltet ist. Es ist als Öffner ausgebildet und hält den Strömungsweg in der unbetätigten Stellung geschlossen.

Dieser Strömungsweg ergibt sich beim Ausführungsbeispiel durch mehrere den Kolben 6 in Axialrichtung radial außerhalb der Stoßstange 16 liegend durchdringende Überströmkanäle 39, die jeweils axialseitig am Stellkolben zum einen in den Hochdruckraum 14 und zum andern in den Niederdruckraum 15 ausmünden. Den kolbenstangenseitigen Mündungen 45 ist hierbei ein Ventilglied 40 des Überströmventils 41 zugeordnet, das sie in der unbetätigten Stellung verschließt, wobei die Schließkraft von einer Federanordnung 44 geliefert wird.

Das Ventilglied 40 ist beim Ausführungsbeispiel ein neben dem Kolben 6 auf der Stoßstange 16 axial bewegbar angeordneter Ringkörper, während die Federanordnung 44 von einem Tellerfederpaket gebildet ist, das mehrere koaxial auf den Ringkörper 40 folgende Tellerfedern enthält. Hierbei ist es von Vorteil, wenn auch das Ventilglied 40 als Tellerfeder ausgebildet ist.

Dem Kolben 6 abgewandt stützt sich die Federanordnung 44 an einer Stufe 43 der Stoßstange 16 ab. Vorzugsweise hat die Federanordnung 44 gleichzeitig auch eine Anschlagfunktion, indem sie dem Stellkolben 6 unter Anlage am Anschlag 30 die Ausgangsstellung vorgibt.

Es versteht sich, daß die Mündungen 45 auf einer mit dem Ventilglied 40 axial fluchtenden Kreislinie plaziert sind. Es ist ferner ersichtlich, daß das Überströmventil 41 zweckmäßigerweise mit dem Kolben 6 mitbewegbar und zumindest teilweise in diesen integriert ist, was der Kompaktheit des Stoßdämpfers zugute kommt.

Die wegabhängig arbeitende zweite Dämpfungseinrichtung 38 verfügt über eine in der Ausgangsstellung offene Abströmöffnung 46, die einerseits mit dem Hochdruckraum 14 und andererseits mit dem Niederdruckraum 15 kommuniziert. Auch sie ist vorzugsweise kolbenfest angeordnet und durchzieht diesen in Axialrichtung. Beim Ausführungsbeispiel fällt ihre Längsachse mit derjenigen der Stoßstange 16 zusammen, und sie dringt von der Seite des Bodenteils 4 stirnseitig in die Stoßstange 16 ein, um zum Ausgleichskolben 22 hin nach Passieren der Federanordnung 44 über Querbohrungen 47 an der Außenseite der Stoßstange 16 in den Niederdruckraum 15 auszumünden.

Der dem Hochdruckraum 14 zugewandten Mündung der Abströmöffnung 46 liegt axial ein gehäusefest am Bodenteil 4 festgelegtes Dämpfungselement 49 gegenüber, das insbesondere stiftförmig ausgebildet ist. Es ist in der Lage, bei der Dämpfungsbewegung 36 des Kolbens 6 in die Abströmöffnung 46 einzutauchen, wobei es den von dieser zur Verfügung gestellten Abströmquerschnitt verringert.

Die Kraft der Federanordnung 44 ist so bemessen, daß das Überströmventil 41 bei einem bestimmten, sich im Hochdruckraum 14 infolge der Komprimierung des darin befindlichen Hydraulikmediums einstellenden Schaltdruckwertes öffnet. Dann kann Hydraulikmedium gedrosselt durch die Überströmkanäle 39 in den Niederdruckraum 15 verdrängt werden. Hierbei ist es zweckmäßig, wenn die Schließkraft des Überströmventils veränderbar einstellbar ist, so daß der für das Öffnen des Ventils maßgebliche Schaltdruckwert von vornherein festgelegt werden kann.

Wenn im Betrieb die Masse 34 mit geringer Energie und insbesondere mit langsamer Aufprallgeschwindigkeit auf der Stoßeinleitungspartie 18 auftrifft, führt der Kolben 6 eine relativ langsame Dämpfungsbewegung 36 aus, so daß das im Hochdruckraum 14 befindliche Hydraulikmedium in der Lage ist, über die Abströmöffnung 46 gedrosselt abzuströmen, ohne daß sich im Hochdruckraum 14 der Schaltdruckwert aufbaut. Durch entsprechende Auslegung des Abströmquerschnitts der Abströmöffnung 46 und der Schließkraft des Überströmventils 41 läßt sich eine derartige Funktionsweise gewährleisten. Erfolgt hingegen der Massenaufprall mit hoher Stoßenergie und mit insbesondere hoher Aufprallgeschwindigkeit, dann ist der Abströmquerschnitt der Abströmöffnung 46 zu klein, um ein rasches Abströmen des Hydraulikmediums aus dem Hochdruckraum 14 zu gewährleisten, so daß sich darin ein hoher Druck bis zum Erreichen des Schaltdruckwertes aufbaut, wonach das Überströmventil 41 öffnet und dann über alle vorhandenen offenen Verbindungen Medium aus dem Hochdruckraum 14 in den Niederdruckraum 15 überströmen kann.

Man erkennt, daß beim Ausführungsbeispiel die Verdrängungsströmung einen Weg durch den Kolben 6 und die Stoßstange 16 hindurch zurücklegt.

Wenn im Laufe der Dämpfungsbewegung 36 das Dämpfungselement 49 in die Abströmöffnung 46 eintaucht, ändert sich der über diese dem Hydraulikmedium zur Verfügung stehende Abströmquerschnitt, so daß eine Zunahme der Dämpfungsintensität festzustellen ist. Beim Ausführungsbeispiel ist zusätzlich vorgesehen, daß sich der wirksame Abströmquerschnitt in Abhängigkeit des vom Kolben 6 zurückgelegten Dämpfungshubes gemäß einer gewünschten Dämpfungscharakteristik ändert. Dadurch läßt sich eine abzubremsende Masse 34 sanft abbremsen und in den Stillstand überführen. Beim Ausführungsbeispiel ist deshalb der sich an die Mündung 48 anschließende Bereich der Abströmöffnung 46 mit sich in Richtung zum Niederdruckraum 15 verjüngendem Querschnitt versehen.

Es ist vorzugsweise vorgesehen, daß das Dämpfungselement 49 erst dann in die Mündung 48 eintaucht, wenn der Kolben 6 bereits ein Stück seiner Dämpfungsbewegung 36 ausgehend vom Anschlag 30 zurückgelegt hat.

Die oben erwähnten Einzelwirkungen der beiden Dämpfungseinrichtungen 37,38 können sich auch ergänzen. So wird bei wirksamer erster Dämpfungseinrichtung 37 regelmäßig die zweite Dämpfungseinrichtung 38 überlagernd wirksam sein, so daß ein zweistufiger Betrieb entsteht, wobei die zweite Betriebsstufe durch das Eintauchen des Dämpfungselements 49 in die Abströmöffnung 46 ausgelöst wird. Vorteilhaft ist auch, daß nach Abbau des größten Teils der Stoßenergie über die erste Dämpfungseinrichtung 37 deren Überströmventil 41 im Laufe der Dämpfungsbewegung 36 schließen kann, so daß die weitere Abdämpfung bis zum Stillstand nurmehr über die wegabhängig arbeitende Dämpfungseinrichtung 38 vorgenommen wird.

Um die Rückstellung des Kolbens 6 nach erfolgter Dämpfungsbewegung 36 in seine Ausgangsstellung am Anschlag 30 zu erleichtern, sind Hochdruckraum 14 und Niederdruckraum 15 vorzugsweise über einen Rückströmkanal 50 zusätzlich untereinander verbunden. Dieser ist zur Abströmöffnung 46 und zu den Überströmkanälen 39 parallelgeschaltet, jedoch mit einem zwischengeschalteten Rückschlagventil 51, das während der Dämpfungsbewegung 36 eine Durchströmung verhindert, indes bei einer entgegengesetzt gerichteten Rückstellbewegung eine Strömung des Hydraulikmediums aus dem Niederdruckraum 15 zurück in den Hochdruckraum 14 gestattet.

Beim Ausführungsbeispiel besteht der Rückströmkanal 50 aus der das Dichtungselement 10 aufnehmenden Umfangsnut des Kolbens 6, die die Überströmkanäle 39 anschneidet und über einen Zwischenraum 52 am Außenumfang des Kolbens 6 mit dem Niederdruckraum 15 kommuniziert. Das Dichtungselement 10 ist in Axialrichtung verlagerbar in der Umfangsnut aufgenommen, und zur Seite des Zwischenraums 52 ist ihm ein weiteres Dichtelement 53 benachbart. Wenn der Kolben 6 seine Dämpfungsbewegung 36 ausführt, wird das Dichtelement 53 gegen die Nutflanke gedrückt und dichtet den Übergang zum Zwischenraum 52 ab. Bei umgekehrter Bewegung hebt das Dichtelement 53 ab, und das Hydraulikmedium kann über den Zwischenraum 52, die das Dichtungselement 10 tragende Umfangsnut und die Überström-kanäle 39 zum Hochdruckraum 14 zurück.

Ergänzend sei noch darauf hingewiesen, daß es vorteilhaft ist, den Abströmquerschnitt der Abströmöffnung 46 veränderbar zu gestalten.

Beim Ausführungsbeispiel wird die Rückstellung des Kolbens 6 maßgeblich vom Ausgleichskolben 22 verursacht, der federbelastet gegen den Niederdruckraum 15 arbeitet und so die Rückströmung des Hydraulikmediums beschleunigt.

Als wesentliche Vorteile der Erfindung lassen sich die kurze Bauart, der einfache, kostengünstige Aufbau und der wartungsarme Betrieb des Stoßdämpfers anführen. Vorteilhaft ist ferner, daß nur wenige Dichtungsteile notwendig sind, ein dynamischer und ein statischer Dichtungsring, wobei die Abdichtung so effektiv ist, daß kein Öl nachgefüllt werden muß. Bei der Montage des Stoßdämpfers wird eine gewisse Vorspannung gewählt, so daß eine gewisse Lebensdauer garantiert werden kann, ohne daß Öl nachgefüllt werden muß. Man erreicht die Vorspannung zweckmäßigerweise dadurch, daß man das Bodenteil 4 des Gehäuses entsprechend tief in den Dämpfungsraum 5 einsteckt und festlegt.

## Patentansprüche

1. Hydraulischer Stoßdämpfer, insbesondere zur Endlagendämpfung bei pneumatischen oder hydraulischen Antrieben, mit einem Gehäuse mit einem an beiden Enden geschlossenen Zylinder (1), der einen Niederdruckraum (15) und einen mit diesem gleichachsigen Hochdruckraum (14) besitzt und in dem ein Arbeitskolben (6) hin und her beweglich geführt ist, an dem eine mit ihrem mit der zu dämpfenden Kraft verbindbaren freien Ende aus dem Gehäuse herausgeführte Kolbenstange (16) befestigt ist, mit einer druckabhängig wirkenden ersten Dämpfungseinrichtung (37), die ein Verschlußglied (41) besitzt, das in der Ausgangsstellung mit einstellbarer Schließkraft an der niederdruckseitigen Ausmündung mindestens einer Durchbohrung (39) im Arbeitskolben (6), diese verschließend, anliegt, und in wirkungsmäßiger Parallelschaltung mit einer wegabhängigen zweiten Dämpfungseinrichtung (38) mit einem feststehenden Verschlußorgan (49), das in Abhängigkeit von der Stellung des Arbeitskolbens mit einer Axialbohrung (46) im Kolben zusammenwirkt, welche Dämpfungseinrichtungen an der Regulierung der Verdrängungsströmung eines vom Arbeitskolben bei Belastung aus dem Hochdruckraum in den Niederdruckraum hinein verdrängten flüssigen Mediums mitwirken, wobei weiterhin ein Druckausgleichsraum mit einem Druckausgleichskolben (22) vorgesehen ist, der unter der Wirkung eines im Druckausgleichsraum untergebrachten Federelementes (29) steht, das bestrebt ist, ihn so vorzubewegen, daß er den Niederdruckraum (15) druckbeaufschlagt, wobei weiterhin ein die Bewegung des Arbeitskolbens vom Hochdruckraum weg begrenzender, von der Kolbenstange durchzogener und im Zylinder fest angeordneter Anschlag vorgesehen ist, zwischen dem und dem Arbeitskolben das Verschlußglied der ersten Dämpfungseinrichtung vorgesehen ist, und wobei weiterhin zur Unterstützung der Rückstellbewegung des Arbeitskolbens (6) an diesem ein zur Axialbohrung (46) und zur mindestens einen Durchbohrung (39) im Arbeitskolben (6) parallelgeschalteter Rückströmkanal (50) vorgesehen ist, dadurch gekennzeichnet, daß der von der Kolbenstange (16) durchzogene Druckausgleichsraum im Zylinder (1) in gleichachsiger Anordnung mit dem Hochdruckraum (14) und dem Niederdruckraum (15) diesen in Richtung auf das freie Ende der Kolbenstange (16) folgend angeordnet und vom Niederdruckraum durch den mit dem Arbeitskolben gleichachsigen Druckausgleichskolben (22) getrennt ist, daß der Anschlag (30) im Zylinder zwischen dem Druckausgleichskolben (22) und dem Hochdruckraum (14) angeordnet ist, und daß der Rückströmkanal (50) einerseits über einen Zwischenraum (52) zwischen der Zylinderwandung und dem Außenumfang des Arbeitskolbens (6) mit dem Niederdruckraum (15) und andererseits über eine Umfangsnut im Arbeitskolben (6) mit der mindestens einen Durchbohrung (39) in diesem in Verbindung steht, wobei in der Umfangsnut ein z.B. ringartiges Dichtungselement (10) in axialer Richtung verlagerbar enthalten ist, an dem ein weiteres in der Umfangsnut enthaltenes Dichtungselement (53) zur Seite des Zwischenraumes (52) hin anliegt, das dann, wenn der Kolben (6) seine Dämpfungsbewegung ausführt, den Übergang zum Zwischenraum (52) abdichtet, bei umgekehrter Bewegung aber den Übergang freigibt.

2. Hydraulischer Stoßdämpfer nach Anspruch 1, dadurch gekennzeichnet, daß die Schließkraft des Verschlußgliedes (41) der ersten, druckabhängig wirkenden Dämpfungseinrichtung (37) veränderbar einstellbar ist, um den für die Öffnung des Verschlußgliedes erforderlichen Schaltdruckwert zu beeinflussen.

3. Hydraulischer Stoßdämpfer nach Anspruch 2, dadurch gekennzeichnet, daß die Schließkraft des Verschlußgliedes (41) von einer Tellerfederanordnung (44) in Gestalt eines Tellerfederpakets geliefert wird.

4. Hydraulischer Stoßdämpfer nach einem der Ansprüche 1 bis 3, dadurch gekennzeichnet, daß die erste, druckabhängig wirkende Dämpfungseinrichtung (37) in den Arbeitskolben (6) zumindest teilweise integriert ist.

## Claims

1. Hydraulic shock absorber, in particular for end position damping in pneumatic or hydraulic drives, with a housing with a cylinder (1) closed at both ends, having a low-pressure chamber (15) and a high-pressure chamber (14) coaxial with the former and in which a working piston (6) is guided so as to be capable of moving to and fro, to which is fastened a piston rod (16) with its free end, connectable to the force to be damped, guided out of the housing, with a pressure-dependent first damping device (37) which has a sealing element (41) which in the initial position lies in contact, with adjustable closing force, with the low-pressure-side opening, which it seals, of at least one passage (39) in the working piston (6), and in effective parallel connection with a distance-dependent second damping device (38) with a fixed sealing element (49), which depending on the position of the working piston interacts with an axial bore (46) in the piston, which damping devices act together in the regulation of the displacement flow of fluid medium displaced by the working piston under load from the high-pressure chamber into the low-pressure chamber, wherein in addition a pressure equalizing chamber with a pressure equalizing piston (22) is provided and is under the influence of a spring element (29) accommodated in the pressure equalizing chamber and which endeavours to move it forward so that it pressurizes the low-pressure chamber (15), wherein also provided is a stop limiting the movement of the working piston away from the high-pressure chamber, pulled through by the piston rod and securely mounted in the cylinder, between which stop and the working piston the sealing element of the first damping device is provided, and wherein also to assist the return movement of the working piston (6), the latter is provided with a return flow channel (50) connected in parallel with the axial bore (46) and at least one passage (39) in the working piston (6), characterized in that the pressure equalizing chamber in the cylinder (1) through which the piston rod (16) passes is mounted coaxially with the high-pressure chamber (14) and the low-pressure chamber (15), following the latter in the direction of the free end of the piston rod (16), and is separated from the low-pressure chamber by the pressure equalizing piston (22) coaxial with the working piston, that the stop (30) is located in the cylinder between the pressure equalizing piston (22) and the high-pressure chamber (14), and that the return flow channel (50) is connected at one end via an intermediate space (52) between the cylinder wall and the outer periphery of the working piston (6) with the low-pressure chamber (15), and at the other end via a peripheral groove in the working piston (6) with the one or more passages (39) in the latter, wherein the peripheral groove holds an axially displaceable e.g. annular sealing element (10), in contact with which is a further sealing element (53) contained in the peripheral groove at the side of the intermediate space (52) and which, when the piston (6) executes its damping movement, seals the passage to the intermediate space (52), but opens the passage for the reverse movement.

2. Hydraulic shock absorber according to claim 1, characterized in that the closing force of the sealing element (41) of the first, pressure-dependent damping device (37) is capable of variable setting, so as to influence the switching pressure value required to open the sealing element.

3. Hydraulic shock absorber according to claim 2, characterized in that the closing force of the sealing element (41) is supplied by a cup spring assembly (44) in the form of a cup spring pack.

4. Hydraulic shock absorber according to anyof claims 1 to 3, characterized in that the first pressure-dependent damping device (37) is integrated at least partially in the working piston (6).

## Revendications

1. Amortisseur hydraulique, en particulier pour amortissement en position de fin de course dans des entraînements pneumatiques ou hydrauliques, comportant un boîtier avec un cylindre (1) fermé aux deux extrémités, qui possède une chambre basse pression (15) et une chambre haute pression (14) de même axe que celle-ci et dans lequel un piston de travail (6) est guidé dans un mouvement de va-et-vient, piston sur lequel est fixée une tige de piston (16) ressortant du boîtier et ayant son extrémité libre à relier à la force d'amortissement, comportant un premier dispositif d'amortissement (37) agissant en fonction de la pression, qui possède un organe de fermeture (41), qui, dans la position de départ, s'applique avec une force de fermeture réglable contre le débouché côté basse pression d'au moins un perçage débouchant (39) pratiqué dans le piston de travail (6), fermant ainsi ce perçage, et comportant, dans un montage parallèle sur le plan de l'action, un deuxième dispositif d'amortissement (38) dépendant de la distance avec un organe de fermeture (49) fixe, qui coopère en fonction de la position du piston de travail avec un perçage axial (46) dans le piston, lesquels dispositifs d'amortissement participent à la régulation de l'écoulement de refoulement d'un fluide liquide déplacé par le piston de travail, en cas de charge, de la chambre haute pression dans la chambre basse pression, une chambre de compensation de pression avec un piston de compensation de pression (22) étant en outre prévue, le piston se trouvant sous l'action d'un élément à ressort (29), logé dans la chambre de compensation de pression, lequel tend à le déplacer vers l'avant de manière qu'il alimente en pression la chambre basse pression (15), une butée limitant le déplacement du piston de travail à partir de la chambre haute pression, traversée par la tige de piston et placée fixe dans le cylindre étant en outre prévue, butée entre laquelle et le piston de travail est prévu l'organe de fermeture du premier dispositif d'amortissement, et, pour assister le mouvement de rappel du piston de travail (6), étant prévu en outre, sur celui-ci, un canal de retour (50) disposé en parallèle au perçage axial (46) et à au moins un perçage débouchant (39) dans le piston de travail (6), caractérisé en ce que la chambre de compensation de pression, traversée par la tige de piston (16), dans le cylindre (1), est disposée suivant le même axe que la chambre haute pression (14) et la chambre basse pression (15), à la suite de celle-ci en direction de l'extrémité libre de la tige de piston (16) et est séparée de la chambre basse pression par le piston de compensation de pression (22) de même axe que le piston de travail, en ce que la butée (30) est placée dans le cylindre entre le piston de compensation de pression (22) et la chambre haute pression (14) et en ce que le canal de retour (50) communique d'une part, par un volume intermédiaire (52) entre la paroi du cylindre et le pourtour extérieur du piston de travail (6), avec la chambre basse pression (15) et d'autre part, par une rainure périphérique ménagée dans le piston de travail (6), avec au moins un perçage débouchant (39) dans celui-ci, la rainure périphérique contenant de manière déplaçable axialement un élément d'étanchéité (10) par exemple en anneau, contre lequel s'applique un autre élément d'étanchéité (53), contenu dans la rainure périphérique, vers le côté du volume intermédiaire (52), qui, lorsque le piston (6) exécute son mouvement d'amortissement, assure l'étanchéité de la transition vers le volume intermédiaire (52), mais libère la transition en cas de mouvement inverse.

2. Amortisseur hydraulique selon la revendication 1, caractérisé en ce que la force de fermeture de l'organe de fermeture (41) du premier dispositif d'amortissement (37), agissant en fonction de la pression, est réglable de manière variable, afin d'influencer la valeur de la pression de commutation, nécessaire pour l'ouverture de l'organe de fermeture.

3. Amortisseur hydraulique selon la revendication 2, caractérisé en ce que la force de fermeture de l'organe de fermeture (41) est fournie par un dispositif à ressorts Belleville (44), sous la forme d'un paquet de ressorts Belleville.

4. Amortisseur hydraulique selon l'une des revendications 1 à 3, caractérisé en ce que le premier dispositif d'amortissement (37), agissant en fonction de la pression, est intégré au moins partiellement dans le piston de travail (6).
